**Europäisches Patentamt**

**European Patent Office**

**Office européen des brevets**

(11) Veröffentlichungsnummer: **0 514 650 A1**

## (12) EUROPÄISCHE PATENTANMELDUNG

(21) Anmeldenummer: **92105508.3**

(22) Anmeldetag: **31.03.92**

(51) Int. Cl.5: **B64C 1/00**, B64D 11/00

(30) Priorität: **21.05.91 DE 4116524**

(43) Veröffentlichungstag der Anmeldung:
**25.11.92 Patentblatt 92/48**

(84) Benannte Vertragsstaaten:
**FR GB**

(71) Anmelder: **DEUTSCHE AIRBUS GMBH
Kreetslag
W-2000 Hamburg(DE)**

(72) Erfinder: **Müller, Hans-Jürgen
Bussardweg 5
W-2359 Henstedt/Ulzburg(DE)**
Erfinder: **Schulz, Hartmut
Im Alvesener Dorfe 4
W-2107 Rosengarten(DE)**
Erfinder: **Sprenger, Wilfried
Buentfeld 21
W-2165 Issendorf(DE)**

(54) **Luftfahrzeug mit Tragflügeln und einem Rumpf.**

(57) Die Erfindung bezieht sich auf ein Großraumflugzeug mit einem Mehrdeckrumpf (9) und Tragflügeln. Der Mehrdeckrumpf (9) enthält ein Hauptdeck (10), ein Oberdeck (11) und ein Unterdeck (12), das wahlweise mit Standardcontainern (13) zum Frachttransport oder Standardmodulen (14) für eine variable Gestaltung, Ausstattung und Passagierbenutzung belegbar ist.

FIG.1

EP 0 514 650 A1

Die Erfindung bezieht sich auf ein Luftfahrzeug mit Tragflügeln und einem Rumpf, in dem ein Hauptdeck und ein Oberdeck für Passagiere, sowie ein Unterdeck zum Transport von Frachtgut vorgesehen ist.

Bei Großraumflugzeugen ist es bekannt, den Rumpf mit mehreren Decks, wie Hauptdeck und Oberdeck für Passagiere, sowie Unterdeck für Frachtgut auszurüsten, um dem steigenden Bedarf nach Transportkapazität angemessen gerecht zu werden. Mit solchen Mehrdeck-Großraumflugzeugen kann man die Rumpflänge vergleichsweise kurz halten, und damit die Abfertigungsprobleme am Boden wegen sonst zu großer geometrischer Dimensionen vermeiden.

Bei solchen Großraumflugzeugen wird für das Unterdeck ein relativ großes Volumen benötigt, um neben dem Frachttransport und dem Raum für das Fahrwerk zusätzlich eine Schwimmfähigkeit bei Notwasserung zu erzielen. Es ist daher mit solchen Unterdeckräumen möglich, Standard-Fracht-Container vorzugsweise der Größe 96 x 96 Zoll (8 x 8 ft) Querschnitt, die bisher nur auf dem Hauptdeck untergebracht werden konnten, zu transportieren. Bei fehlender Fracht und entsprechender Passagiernachfrage wäre es aber zweckmäßig, das Unterdeck während des Reiseflugs auch zur Nutzung durch Passagiere oder sogar als zusätzliche Sitzkapazität während des gesamten Fluges -vom Start bis zur Landung- heranzuziehen.

Der Erfindung liegt daher die Aufgabe zugrunde, bei einem Luftfahrzeug gemäß dem Oberbegriff des Anspruchs 1 das zum Transport von Standardcontainern ausgelegte Unterdeck zur wahlweisen Aufnahme von Einrichtungen für einen Passagiertransport auszulegen. Diese Aufgabe ist gemäß der Erfindung dadurch gelöst, daß das Unterdeck mit Befestigungselementen für in Doppelreihe verstaubarer Standardcontainer ausgerüstet ist, und daß das Unterdeck anstelle der Standardcontainer mit Standardmodulen für eine variable Gestaltung, Ausstattung und Passagierbenutzung belegbar ist.

Die erfindungsgemäße Maßnahme hat eine hohe Nutzlastflexibilität für ein Mehrdeck-Großraumflugzeug zur Folge, welche sich durch eine Zusammenstellung der paarweise aus Halbmodulen zusammengesetzten Standardmodule im Unterdeck ergibt, die in einer vorbestimmbaren Reihenfolge mit einem, im Unterdeck vorgesehenen Frachtladesystem an die vorbestimmte Position im Unterdeck transportierbar und dort fixierbar sind.

Die am Unterdeck befestigten und aneinandergereihten Module werden untereinander zu Funktionsräumen verbunden. Außerdem können die Module bestimmter Ausstattung an Positionen im Unterdeck angeordnet werden, die entsprechenden Positionen des Hauptdecks und des Oberdecks entsprechen. Weiterhin ist es zweckmäßig, daß die Module sich gegenseitig ergänzen, und bestimmte Module untereinander zu kombinieren.

Die Erfindung wird anhand der beiliegenden Zeichnung näher erläutert. Es zeigen:

Fig. 1 ein Großraumflugzeug mit einem Mehrdeck-Rumpf,

Fig. 2 drei Längsschnitte a, b, c durch den Mehrdeck-Rumpf eines Großraumflugzeuges,

Fig. 3 zwei Querschnitte durch den Mehrdeck-Rumpf eines Großraumflugzeuges,

Fig. 4 ein Treppenmodul für das Unterdeck eines Großraumflugzeuges in drei Ansichten,

Fig. 5 ein Passagierbetten-Modul für das Unterdeck eines Großraumfugzeuges,

Fig. 6 ein Belegungsbeispiel für das Unterdeck eines Großraumflugzeuges,

Fig. 7 zwei weitere Belegungsbeispiele für das Unterdeck eines Großraumflugzeuges und

Fig. 8 ein Passagiersitz-Kabinen-Modul für das Unterdeck eines Großraumflugzeuges.

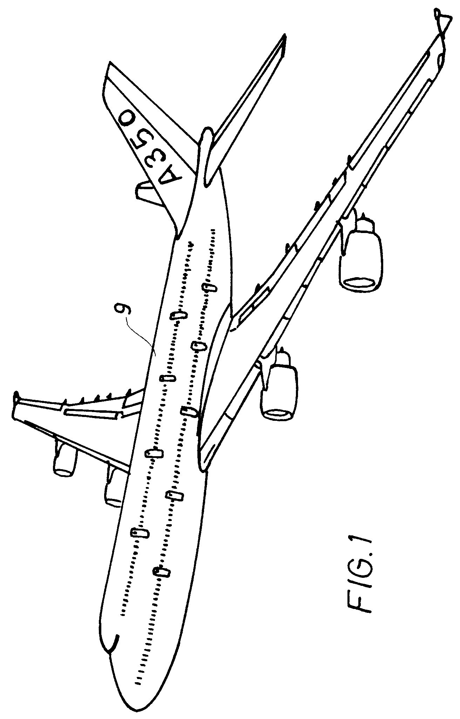

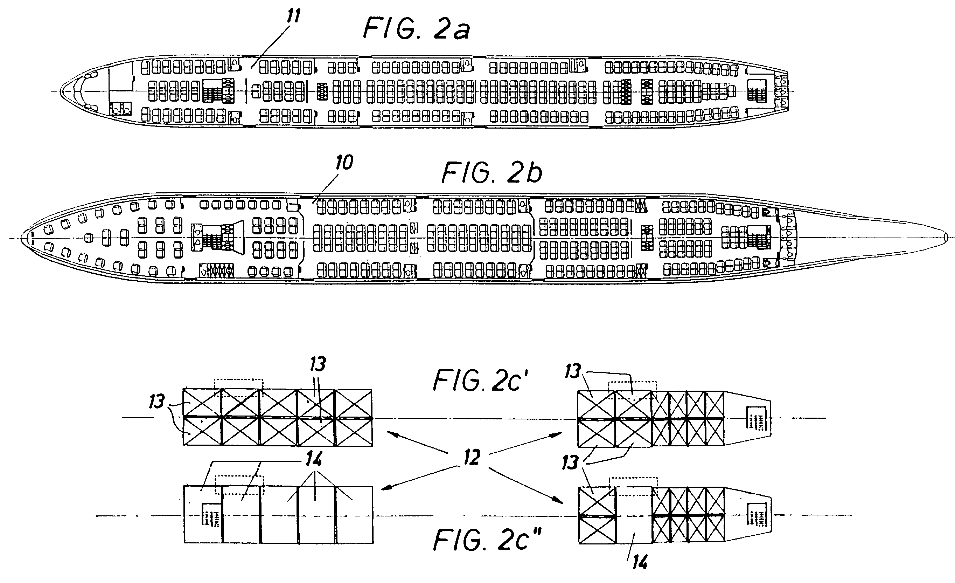

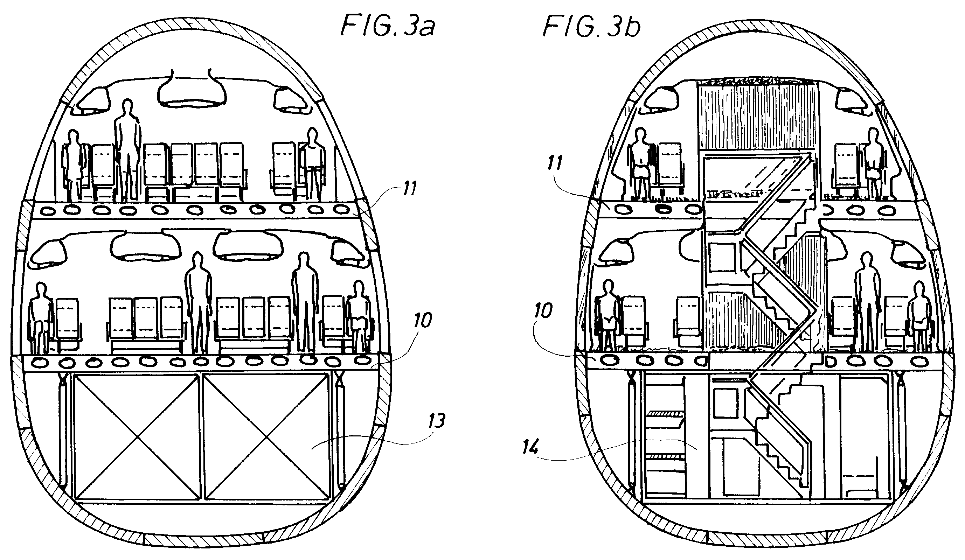

In der Darstellung nach Fig. 1 ist ein Großraumflugzeug abgebildet, dessen Rumpf 9, wie Fig. 2 und Fig. 3 zeigen, mit einem Hauptdeck 10, einem Oberdeck 11 und einem Unterdeck 12 versehen ist. Das Hauptdeck 10 und das Oberdeck 11 sind mit entsprechenden Einrichtungen zum Transport von Passagieren versehen, während das Unterdeck 12 wahlweise mit Standard-Fracht-Containern 13 in Doppelreihe oder paarweise zusammensetzbarer Komplettmodule 14 belegbar ist.

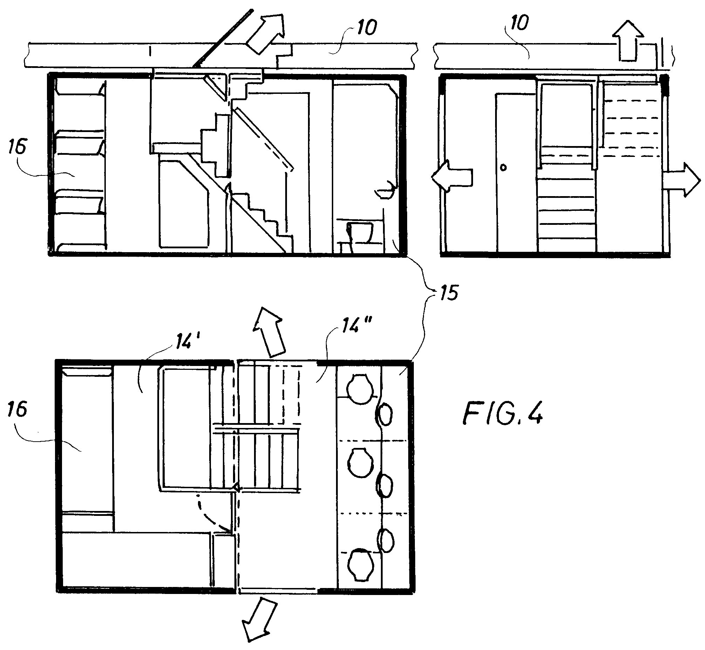

Fig. 4 zeigt in drei Ansichten ein Komplett-Modul 14, und zwar ein sog. Treppen-Modul 15, das aus zwei sich einander ergänzenden Halbmodulen 15', 15'' besteht. Jedes dieser Halbmodule gemäß Fig. 4 enthält die zum Aufbau eines Treppen-Moduls 15 erforderlichen Einrichtungen, während die Resträume dieser Halbmodule z.B. für Toiletten, Duschen oder Besatzungs-Ruheräume benutzt werden können.

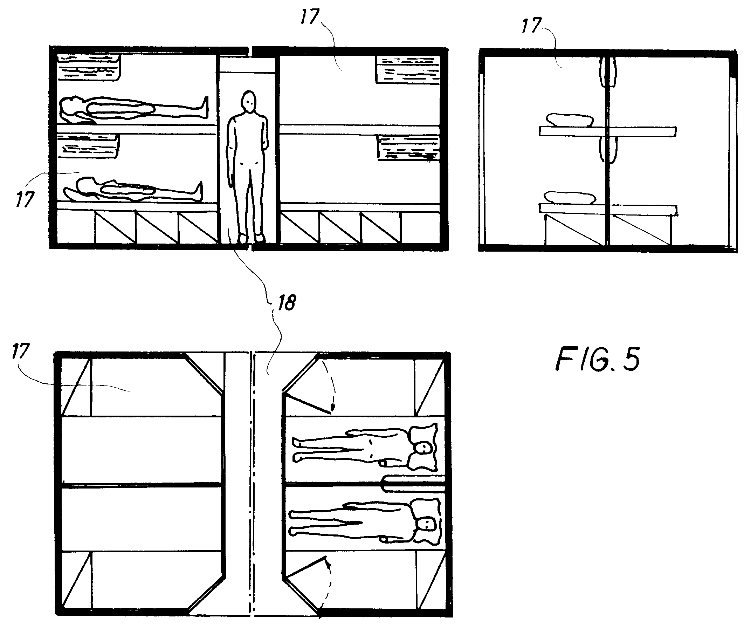

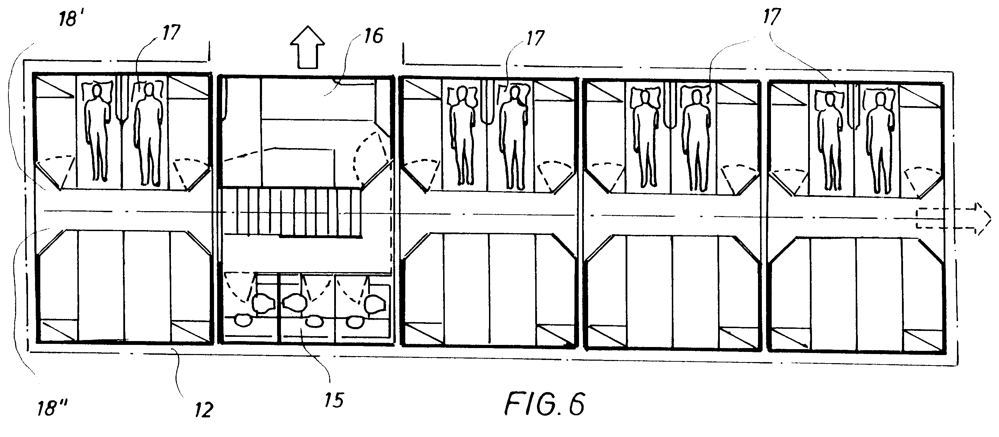

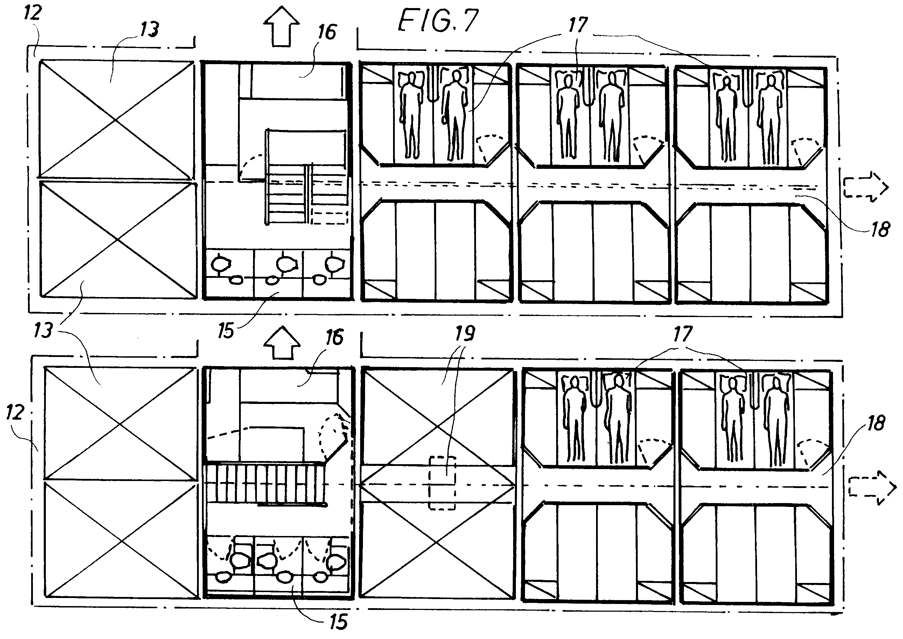

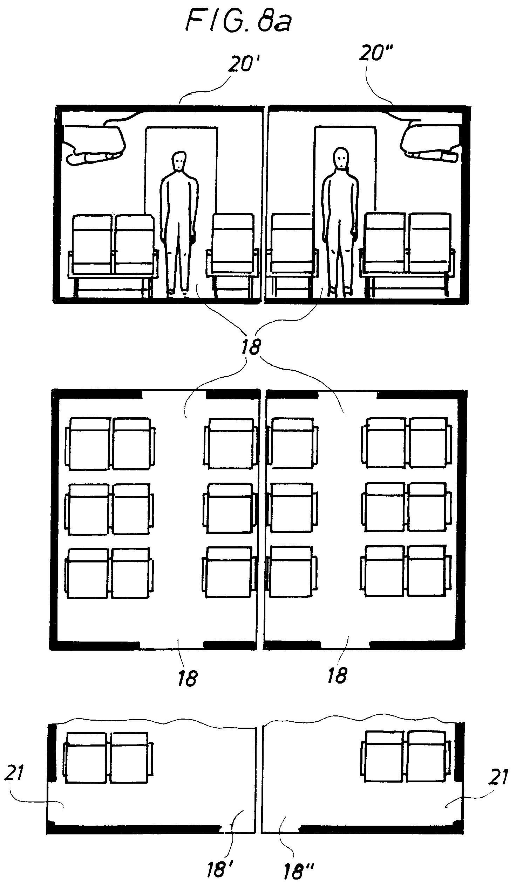

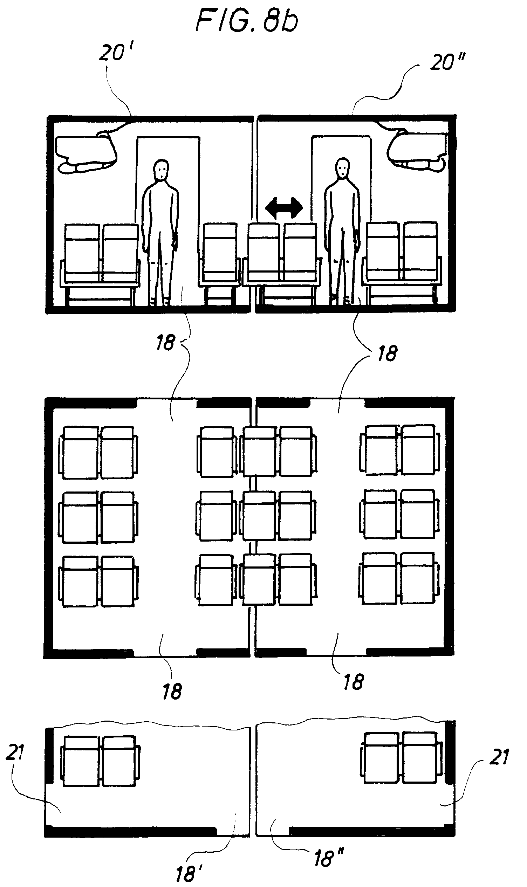

Fig. 5 zeigt ein Komplett-Modul 14, und zwar ein Passagierschlaf-Kabinen-Modul 16, das durch einen Gang 18 getrennte Schlafkabinen 16', 16'' enthält. Fig. 6 und Fig. 7 zeigen zwei Möglichkeiten, das Unterdeck 12 eines Großraumflugzeuges 9 wahlweise mit Passagier-Schlafkabinen-Modulen 16, Treppen-Modulen 15, Küchenvorrats-Modulen 17 oder Standard-Fracht-Containern 13 zu belegen.

Wie zuvor schon erläutert, setzt sich ein Komplett-Modul 14 grundsätzlich aus zwei Halbmodulen 14',14'' zusammen, die einzeln jeweils die Maße eines Standard-Fracht-Containers aufweisen. Diese Halbmodule werden einzeln in einer vorbestimmbaren Reihenfolge durch das Frachttor und mit einem Frachtladesystem an die zugewiesene Position im Unterdeck des Großraumflugzeuges gebracht. Mittels Befestigungselementen, wie Schnellkupplungen, werden diese Halbmodule dann zu den gewünschten Komplett-Modulen vereinigt. Mehrere Komplett-Module bieten dann durch Aneinanderreihen die Möglichkeit bestimmte Funktionsräume im Unterdeck aufzubauen. Bestimmte Module, wie Treppen-Module 15 und Küchen-Vorrats-Module 17 werden aber an Positionen angeordnet, die entsprechenden Positionen im Haupt- und Oberdeck entsprechen. Die Positionierung der Module erlaubt es auch, Lifte 19 einzusetzen, um z.B. Küchen-Vorrats-Module 17 mit den Kücheneinrichtungen des Hauptdecks 10 und des Oberdecks 11 miteinander zu verbinden.

Weiterhin ist es möglich, die Module mit Sekretariats- oder Telekommunikationseinrichtungen zu versehen, sowie als Bar, Bistro oder Fitnesscenter bzw. als Toiletten-Modul für die Passagiere des Haupt- und Oberdecks einschließlich wechselnder Kombinationen aufzubauen. Alle Module 14 enhalten in ihren Halbmodulen 14', 14'' jeweils nur einen Halbgang 18', 18'', der erst nach dem Zusammenstellen zu einem Komplett-Modul 14 als vollständiger Gang 18 zur Verfügung steht.

Die vorgeschlagenen Passagier-Module 14 sind zunächst nur für eine Passagierbenutzung während des Reisefluges vorgesehen, da während des Reisefluges nicht die strengen Vorschriften für Start- und Lande-Notfälle gelten. Es ist aber auch möglich (Fig. 8), die sich ergänzenden Halbmodule 14', 14'' mit Sitzeinrichtungen auszurüsten und diese Passagiersitz-Komplett-Module 20 mit den für Start- und Landebedingungen erforderlichen Einrichtungen wie Zugang zu den Notausstiegen in den Seitenwänden des Flugzeug-Unterdecks zu versehen. Die Sitzmodule 20 können dann ebenfalls im Frachtladesystem verankert und mit Schnellkupplungen an die Flugzeugsysteme angeschlossen werden.

Die Passagiere erreichen die Nachbarmodule (z.B. weitere Sitzmodule 20 oder das Treppenmodul 15) über zwei Gänge 18 oder einen Gang, bestehend aus zwei Halbgängen 18' und 18'' (die jeweils einem Halbmodul zugeordnet sind).

Zugang zu den seitlichen Notausstiegen im Unterdeck 12 ist an einigen Sitzmodulen durch seitliche Öffnungen 21 in den Halbmodulen vorzusehen. Ggf. sind Fensteröffnungen vorzusehen (hier nicht dargestellt).

Der zentrale Doppelsitz in Fig. 8 b ist köpp- oder verschiebbar anzuordnen, um ihn für das Verbringen des Halbmoduls in das unterdeck vollständig in der Kontur seines Halbmoduls verschwinden zu lassen.

Bezugszahlen

| 9 | Großraumflugzeug |
| 10 | Hauptdeck |
| 11 | Oberdeck |
| 12 | Unterdeck |
| 13 | Standard-Fracht-Container 8 x 8 x 10.4 ft |
| 14 | Komplettmodul für Passagiereinrichtungen |
| 14' | Halbmodul für Passagiereinrichtungen |
| 14'' | Halbmodul für Passagiereinrichtungen |
| 15 | Treppen-Komplett-Modul |
| 15' | Treppen-Halb-Modul |
| 15'' | Treppen-Halb-Modul |
| 16 | Passagier-Schlafkabinen-Komplett-Modul |
| 16' | Passagier-Schlafkabinen-Halb-Modul |
| 16'' | Passagier-Schlafkabinen-Halb-Modul |
| 17 | Küchenvorrats-Komplett-Modul |
| 18 | Gang |
| 18' | Halbgang |
| 18'' | Halbgang |
| 19 | Lift |
| 20 | Passagier-Sitzkabinen-Komplett-Modul |
| 21 | Öffnung |

## Patentansprüche

1. Luftfahrzeug mit Tragflügeln und einem Rumpf, in dem ein Hauptdeck und ein Oberdeck für Passagiere, sowie ein Unterdeck zum Transport von Frachtgut vorgesehen ist, dadurch gekennzeichnet, daß das Unterdeck (12) mit Befestigungselementen für in Doppelreihe verstaubarer Standard-Fracht-Container (13) ausgerüstet ist, und daß das Unterdeck (12) anstelle der Standardcontainer (13) mit Standardmodulen (14) für eine variable Gestaltung, Ausstattung und Passagierbenutzung belegbar ist.

2. Luftfahrzeug nach Anspruch 1, dadurch gekennzeichnet, daß die Standardmodule (14) aus paarweise zusammensetzbaren Halbmodulen (14', 14'') bestehen, die in einer vorbestimmbaren Reihenfolge mit einem im Unterdeck (12) vorgesehenen Frachtladesystem an die vorbestimmte Position im Unterdeck (12) transportierbar sind.

3. Luftfahrzeug nach Anspruch 1 oder 2, dadurch gekennzeichnet, daß die am Unterdeck (12) befestigten aneinander gereihten Module (14) zu Funktionsräumen untereinander verbindbar sind.

4. Luftfahrzeug nach einem der Ansprüche 1 bis 3, dadurch gekennzeichnet, daß die Module (14) bestimmter Ausstattung an Positionen im Unterdeck (12) angeordnet sind, die mit entsprechenden Positionen des Hauptdecks (10) und des Oberdecks (11) übereinstimmen.

5. Luftfahrzeug nach einem der Ansprüche 1 bis 4, dadurch gekennzeichnet, daß die paarweise zusammensetzbaren Halbmodule (14', 14'') sich zu einem einsatzfähigen Komplett-Modul ergänzen.

6. Luftfahrzeug nach einem der Ansprüche 1 bis 5, dadurch gekennzeichnet, daß die Halbmodule (14', 14'') an die Maße der Standard-Fracht-Container (13) angepaßt sind.

FIG.1

9

A350

EP 0 514 650 A1

FIG. 2a

FIG. 2b

FIG. 2c'

FIG. 2c''

FIG.3a

FIG.3b

FIG. 4

EP 0 514 650 A1

FIG.5

EP 0 514 650 A1

FIG.6

FIG.7

EP 0 514 650 A1

# FIG. 8a

# FIG. 8b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 083 552 (BLACKBURN AND GENERAL AIRCRAFT LTD.) <br> * Seite 1, linke Spalte, Zeile 1 - Zeile 6 * <br> * Seite 2, linke Spalte, Zeile 33 - rechte Spalte, Zeile 12 * <br> * Seite 3, linke Spalte, Zeile 36 - rechte Spalte, Zeile 12 * <br> * Seite 4, linke Spalte, Zeile 49 - Seite 5, linke Spalte, Zeile 21; Abbildungen 1-3,11-18 * | 1 | B64C1/00 <br> B64D11/00 |
| A | US-A-4 925 132 (ZIDER) <br> * Spalte 3, Zeile 54 - Spalte 4, Zeile 31 * <br> * Spalte 7, Zeile 59 - Spalte 8, Zeile 16; Abbildungen 8,10 * | 1 | |
| P,A | AVIATION WEEK AND SPACE TECHNOLOGY. <br> Bd. 136, Nr. 8, 24. Februar 1992, NEW YORK US <br> Seite 35; 'VARIOUS CROSS SECTIONS EVALUATED FOR LARGE TRANSPORT' <br> * Abbildung * | 1 | |
| A | EP-A-0 035 955 (SCHWEIZERISCHE ALUMINIUM AG) <br> * Anspruch 1; Abbildungen 1-4 * | 1 | RECHERCHIERTE SACHGEBIETE (Int. Cl.5) <br><br> B64C <br> B64D |
| A | AVIATION WEEK AND SPACE TECHNOLOGY. <br> 5. Oktober 1987, NEW YORK US <br> Seite 41; 'AIRBUS, MBB DEFINE CARGO HOLD REST AREA' | 1 | |

Der vorliegende Recherchenbericht wurde für alle Patentansprüche erstellt

| Recherchenort | Abschlußdatum der Recherche | Prüfer |
|---|---|---|
| DEN HAAG | 27 AUGUST 1992 | ZERI A. |